(19) **Europäisches Patentamt**
**European Patent Office**
**Office européen des brevets**

(11) **EP 1 904 990 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
***G08G 1/0968*** *(2006.01)*   ***G08G 1/123*** *(2006.01)*
***G01C 21/34*** *(2006.01)*

(21) Anmeldenummer: **06764108.4**

(86) Internationale Anmeldenummer:
**PCT/EP2006/064008**

(22) Anmeldetag: **07.07.2006**

(87) Internationale Veröffentlichungsnummer:
**WO 2007/009892 (25.01.2007 Gazette 2007/04)**

(54) **VERFAHREN ZUR ENTZERRUNG VON VERKEHRSSTRÖMEN SOWIE ZUR STAUVERMEIDUNG UND -AUFLÖSUNG**

METHOD FOR EQUALIZING TRAFFIC FLOWS AND FOR AVOIDING AND RESOLVING CONGESTION

PROCEDE POUR CORRIGER DES FLUX DE CIRCULATION, POUR EVITER LA FORMATION DE BOUCHONS ET LES DISSOUDRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.07.2005 DE 102005033460**

(43) Veröffentlichungstag der Anmeldung:
**02.04.2008 Patentblatt 2008/14**

(73) Patentinhaber: **SIEMENS AKTIENGESELLSCHAFT**
**80333 München (DE)**

(72) Erfinder: **KOLB, Dieter**
**82110 Germering (DE)**

(56) Entgegenhaltungen:
**DE-A1- 10 203 242        DE-A1- 10 224 467**
**US-A1- 2003 069 683**

## Beschreibung

Die Erfindung betrifft ein Verfahren zur Entzerrung von Verkehrsströmen sowie zur Stauvermeidung und -auflösung, bei dem, wenn mehrere alternativ mögliche Routen zu einem jeweiligen Zielort zur Verfügung stehen, Verkehrsteilnehmer in koordinierter Weise individuelle Routenempfehlungen erhalten.

Kontinuierlich zunehmender Straßenverkehr führt zu Staus mit massiven negativen Auswirkungen. Stauvermeidung bzw. schnelle Auflösung von Staus ist das Ziel. Dazu werden Informationen über Staus und Umleitungsempfehlungen an die Verkehrsteilnehmer gegeben. Dies hat häufig die Konsequenz, dass auf der empfohlenen Umleitungsstrecke der Verkehr zusammenbricht.

Zur Beseitigung dieser Problematik ist beispielsweise aus dem Informatikseminar am 8.04.2004 an der FH Wedel von Prof. Dr. Uwe Schmidt und Dr. Sebastian Iwanowski zum Thema "Verteilte Systeme" ein Auktionsbasiertes Verfahren für individuelle Routenempfehlungen bekannt, bei dem im Hintergrund in periodischen Auktionsrunden Benutzungsrechte für Streckensegmente für bestimmte Zeitintervalle versteigert werden und die Fahrzeuge periodisch ein virtuelles Budget erhalten. DE 10203242 A1 beschreibt eine weitere Lösung.

Die der Erfindung zu Grunde liegende Aufgabe besteht nun darin, ein Verfahren zur Entzerrung von Verkehrsströmen sowie zur Stauvermeidung und -auflösung anzugeben, bei dem eine möglichst einfache und zuverlässige Entzerrung der Verkehrsströme und Minimierung der Fahrzeit ermöglicht wird.

Diese Aufgabe wird erfindungsgemäß durch die Merkmale des Patentanspruchs 1 gelöst.
Die Gegenstände der weiteren Ansprüche betreffen bevorzugte Ausgestaltungen des erfindungsgemäßen Verfahrens.

Die Erfindung besteht im wesentlichen in einem Verfahren, bei dem Verkehrsströme dadurch entzerrt werden, dass Verkehrsteilnehmer von einem Verkehrsleitrechner individuelle Routenempfehlungen derart erhalten, dass der Verkehrsleitrechner für jeden Routenverzweigungspunkt in bestimmten Zeitabständen ein neues jeweiliges Verteilungsverhältnis für die statistische Häufigkeit der jeweiligen Routenempfehlungen an einem jeweiligen Routenverzweigungspunkt aus Meldungen von Verkehrsteilnehmern und Routensegmentparametern, wie bspw. Auslastung und mittlere Fahrgeschwindigkeit, ermittelt,
wobei bei günstigeren Verkehrsbedingungen einer Route eine größere Häufigkeit zugeteilt wird als bei schlechteren Bedingungen, und dass ein jeweiliger Verkehrsteilnehmer vor einem jeweiligen Routenverzweigungspunkt eine zufällige Routenempfehlung aus der Menge der alternativ möglichen Routen nach Maßgabe der statistischen Häufigkeit der jeweiligen Routenempfehlungen erhält. Dieses Verfahren ist insbesondere für Fahrzeuge mit Navigationssystem geeignet.

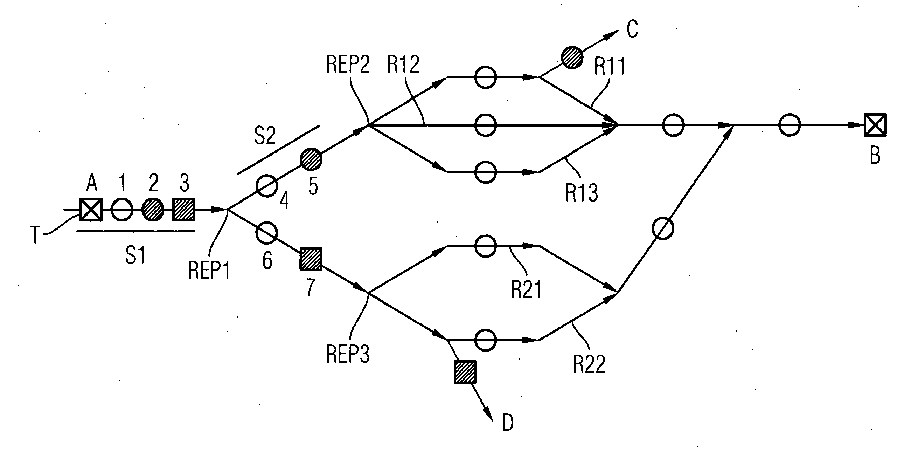

Nachfolgend wird die Erfindung anhand eines in der Zeichnung dargestellten Ausführungsbeispiels näher erläutert.

Die Zeichnung zeigt ein aus Segmenten, z.B. S1 und S2, bestehendes Streckennetz in Form eines gerichteten Graphen zwischen einer aktuellen Position A eines Verkehrsteilnehmers T und dessen Zielort B, wobei dieser Graph im Allgemeinen an Routenverzweigungspunkten, z.B. REP1, REP2, und REP3, alternativ wählbare Streckenabschnitte sowie auch Übergänge zu anderen Zielorten, z. B. zu C und D aufweist. In diesem Ausführungsbeispiel teilt sich der Graph an dem ersten Routenverzweigungspunkt REP1 in einem linken Zweig, der danach an einem zweiten Routenverzweigungspunkt REP2 in drei weitere Zweige aufgeteilt ist, und in einen rechten Zweig, der danach an einem dritten Routenverzweigungspunkt REP3 in zwei weitere Zweige aufgeteilt ist. Somit ergeben sich über den linken Zweig des Graphen drei mögliche Routen R11, R12 und R13 und über den rechten Zweig des Graphen zwei mögliche Routen R21 und R22 vom Punkt A zum Zielpunkt B. Im Segment S1 vor dem ersten Routenverzweigungspunkt REP1 sind neben den in Form von kleinen Kreisen dargestellten Fahrzeugen, die zum Ziel B wollen auch als ausgefüllte Kreise oder Quadrate dargestellte Fahrzeuge, die bspw. zu den Zielen C und D wollen. Auf dem ersten Segment des linken Zweiges nach dem ersten Routenverzweigungspunkt REP1 sind bspw. nur noch Fahrzeuge mit dem Ziel B oder C, da die Fahrzeuge mit dem Ziel D nur den rechten Zweig benutzen können.

Alle oder ein ausgewählter repräsentativer Teil der Verkehrsteilnehmer T und 1...7 gibt Meldungen M an mindestens einen Verkehrsleitrechner ab, wobei eine solche Meldung mindestens eine Kennung des Fahrzeugs und dessen Position zu einem bestimmten Zeitpunkt beinhaltet.

Vorteilhafterweise beinhaltet eine solche Meldung auch noch den Zielort des Fahrzeugs.

Der mindestens eine Verkehrsleitrechner ermittelt für jeden Routenverzweigungspunkt REP1,REP2,REP3 in bestimmten Zeitabständen ein neues jeweiliges Verteilungsverhältnis V für die statistische Häufigkeit der jeweiligen Routen eines jeweiligen Routenverzweigungspunktes aus Meldungen M von Verkehrsteilnehmern und Routensegmentparametern, wie bspw. Auslastung und mittlere Geschwindigkeit,
wobei bei günstigeren Verkehrsbedingungen einer Route eine größere Häufigkeit zugeteilt wird als bei schlechteren Bedingungen.

Ein jeweiliger Verkehrsteilnehmer T erhält vor einem jeweiligen Routenverzweigungspunkt, bspw. am aktuellen Punkt A, eine zufällige Routenempfehlung RE aus der Menge der alternativ möglichen Routen nach Maßgabe der statistischen Häufigkeit der jeweiligen Routenverzweigungen.

Optional erfolgen, z.B. über bereits bestehende Induktionsschleifen in der Fahrbahn oder aktiv über das Fahrzeug selbst, Rückmeldungen an den Verkehrsleitrechner auf welchem Routensegment das Fahrzeug bzw. der Fahrer am Routenverzweigungspunkt weiter fährt. Entsprechend wird die Aufteilung der nachfolgenden Fahrzeuge auf die einzelnen Routen angepasst.

Durch das Verteilen der Fahrzeuge auf die unterschiedlichen Routen verändert sich deren verbleibende Aufnahmekapazität. Ebenso ändert sich die Aufnahmekapazität, wenn Fahrbahnsperrungen aufgehoben oder Staus sich aufgelöst haben. Deshalb wird das Verteilungsverhältnis ständig überprüft und angepasst.

Realisiert werden kann diese individuelle Routenzuteilung auf verschiedene Weisen. Bei Fahrzeugen mit eingebautem Navigationssystem kann die Routenzuteilung direkt dem Navigationssystem mitgeteilt werden, das den Fahrer dann entsprechend leitet.

Eine erste Methode zur Erzeugung und Übertragung der individuellen Routenempfehlung besteht darin, dass über Rundfunk-basierte Verkehrsnachrichtenkanäle wie TMC (Traffic Message Channel) oder dessen Nachfolgesysteme die Information über das Verteilungssverhältnis V der Routen an die Navigationssysteme der einzelnen Fahrzeuge übermittelt werden. Das jeweilige Navigationssystem wählt dann, wenn der zu entzerrende Streckenabschnitt für das vom Fahrer eingegebene Fahrziel B relevant ist, selbstständig anhand einer Zufallszahl eine der alternativen Routen $R11, ..., R22$ und leitet den Fahrer entsprechend. Das Auswahlverfahren ist so gestaltet, dass über die Menge aller beteiligten Systeme eine Aufteilung der Fahrzeuge auf die einzelnen Routen im gewünschten Verhältnis erreicht wird.

Ein vorteilhaftes Auswahlverfahren wird bspw. wie folgt durchgeführt, wobei sich die Fahrzeuge im Verhältnis $k1 : k2 : ... : kn$ auf die einzelnen Routen verteilen werden:

Wähle Zufallszahl z zwischen 0 und <1.

$$k = k_1 + k_2 + ... + k_n$$

$$S_i = ( k_1 + k_2 + ... + k_i ) / k ; S_0 = 0$$

Wähle Route $r_i$ wenn $S_{i-1} \leq z < S_i$

Eine weitere Methode zur Erzeugung und Übertragung der individuellen Routenempfehlung besteht darin, dass über eine drahtlose Kommunikationsverbindung, z.B. Wireless LAN (WLAN) oder Infrarot oder Mikrowelle, kurzzeitig eine Verbindung zwischen einer an der Straße montierten Anlage und einem Fahrzeug aufgebaut wird. Über diese Verbindung werden den vorbeifahrenden Fahrzeugen abwechselnd die unterschiedlichen Routenempfehlungen RE im Verhältnis $k2 : k2 ... : kn$ übermittelt.

Eine letzte Methode zur Erzeugung und Übertragung der individuellen Routenempfehlung besteht darin, dass über eine drahtlose Kommunikationsverbindung, z.B. eine WLAN- oder eine GPRS- oder UMTS-Mobilfunkverbindung, zwischen dem Fahrzeug des Teilnehmers T und dem Verkehrsleitsystem die jeweilige konkrete Routenempfehlung RE vom Leitsystem individuell an die einzelnen Verkehrsteilnehmer übertragen wird. Die Gesamtheit der Fahrzeuge erhält Empfehlungen für die verschiedenen Routen im Verhältnis $k1 : k2 ... : kn$.

Im Fahrzeug wird der Hinweis dann an das Navigationssystem weitergegeben; der Fahrer wird über die Sprachausgabe des Navigationssystems akustisch informiert.

Vorteilhafterweise wird optional zusätzlich über die Kommunikationsschnittstelle des Navigationssystems das vom Fahrer eingegebene Fahrziel an den Server des Verkehrsleitrechners übermittelt. Der Server berücksichtigt das Fahrzeug nur dann bei der Zuteilung einer individuellen Routenempfehlung, wenn die Verkehrsentzerrung für das Fahrzeug aufgrund seines Fahrziels relevant ist. Dadurch wird die Routenaufteilung nicht über alle Fahrzeuge durchgeführt, sondern nur über die, die wirklich von A nach B fahren wollen, was letztendlich den Verkehr noch besser entzerrt.

Eine letzte Ausführungsvariante des erfindungsgemäßen Verfahrens ermöglicht die Verkehrsentzerrung mit bereits heute bestehender Infrastruktur und ist auch für Fahrzeuge ohne Navigationssystem geeignet:

An Verkehrsknotenpunkten, an denen der Verkehr bei Bedarf entzerrt werden soll, sind Wechselhinweisschilder aufgestellt. Diese können den Weg nach B über die eine oder die andere Route leiten. Wenn der Verkehr entzerrt werden soll, dann weist das Wechselhinweisschild abwechselnd für n Sekunden den Weg nach B über die eine Route und schaltet dann um und leitet für m Sekunden den Weg über die andere Route. Die Zeiten n und m entsprechen dem Verhältnis, in dem der Verkehr auf die alternativen Routen aufgeteilt werden soll. Fahrer, die sich nicht an die Verkehrsempfehlung halten und z.B. den ihnen vertrauten Weg wählen, werden erfasst und beeinflussen das Aufteilungsverhältnis für die nachfolgenden Fahrzeuge.

Die einzelnen erfindungsgemäßen Verkehrsentzerrungsverfahren können unabhängig voneinander realisiert werden aber auch eine Kombination von mehreren Verfahren ist möglich und sinnvoll.

**Patentansprüche**

1. Verfahren zur Entzerrung von Verkehrsströmen sowie zur Stauvermeidung und -auflösung, bei dem, wenn mehrere alternativ mögliche Routen (R11, R12, R13, R21, R22) zu einem jeweiligen Zielort (B) zur Verfügung stehen, Verkehrsteilnehmer (T, 1,.., 4) individuelle Routenempfehlungen (RE) erhalten, bei dem mindestens ein Verkehrsleitrechner für jeden Routenverzweigungspunkt (REP1,REP2,REP3) in bestimmten Zeitabständen ein neues jeweiliges Verteilungsverhältnis (V) für die statistische Häufigkeit der jeweiligen Routenempfehlungen an einem jeweiligen Routenverzweigungspunkt (REP1) aus Meldungen (M) von Verkehrsteilnehmern und Routensegmentparametern ermittelt, wobei bei günstigeren Verkehrsbedingungen einer Route eine größere Häufigkeit zugeteilt wird, bei dem ein jeweiliger Verkehrsteilnehmer (T) vor einem jeweiligen Routenverzweigungspunkt eine zufällige Routenempfehlung (RE) aus der Menge der alternativ möglichen Routen nach Maßgabe der statistischen Häufigkeit der jeweiligen Routenempfehlungen erhält.

2. Verfahren nach Anspruch 1, bei dem die Verkehrsteilnehmer in den Meldungen zusätzlich ihr Fahrziel an den Verkehrsleitrechners übermitteln und bei dem der Verkehrsleitrechner den jeweiligen Verkehrsteilnehmer nur dann bei der Zuteilung einer individuellen Routenempfehlung berücksichtigt, wenn das jeweilige Fahrziel der Routenempfehlung mit dem jeweiligen Fahrziel des Verkehrsteilnehmers übereinstimmt.

3. Verfahren nach Anspruch 1 oder 2, bei dem das jeweilige Verteilungsverhältnis (V) über Rundfunk-basierte Verkehrsnachrichtenkanäle an die Verkehrsteilnehmer übermittelt wird und bei dem die individuellen Röutenempfehlungen mit Hilfe eines Fahrzeugnavigationssystems aus dem empfangenen jeweiligen Verteilungsverhältnis (V) der Routen gebildet wird.

4. Verfahren nach Anspruch 3, bei dem vor einem jeweiligen Routenverzweigungspunkt für einen jeweiligen Teilnehmer eine jeweilige Route $r_i$ entsprechend dem jeweiligen Verteilungsverhältnis $k_1:k_2: ... :k_n$ zufällig aus n alternativ möglichen Routen derart ausgewählt wird, dass die Route $r_i$ dann ausgewählt wird, sofern eine jeweils erzeugte Zufallszahl z zwischen 0 und kleiner 1 im zur jeweiligen Route gehörigen Intervall $S_{i-1} <= z < S_i$ liegt, wobei die jeweiligen Intervallgrenzen durch die Beziehungen $S_0=0$ und $S_i=(k_1+k_2+...+k_i)/(k_1+k_2+...+k_n)$ festgelegt sind.

5. Verfahren nach Anspruch 1 oder 2, bei dem die jeweilige Routenempfehlung (RE) **dadurch** übertragen wird, dass vor einem jeweiligen Routenverzweigungspunkt (REP1,REP2,REP3) über eine drahtlose Kommunikationsverbindung kurzzeitig eine Verbindung zwischen einer an der Straße montierten Anlage und dem Fahrzeug des jeweiligen Teilnehmers aufgebaut wird.

6. Verfahren nach Anspruch 1 oder 2, bei dem die jeweilige Routenempfehlung (RE) **dadurch** übertragen wird, dass eine individuelle drahtlose Kommunikationsverbindung zwischen Verkehrsleitrechner und dem einzelnen Verkehrsteilnehmer aufgebaut wird.

7. Verfahren nach einem der Ansprüche 1 oder 2, bei dem die individuellen Routenempfehlungen mit Hilfe von Wechselhinweisschildern bewirkt werden, wobei die Anzeigezeiten der einzelnen alternativen Hinweisschilder entsprechend dem Verteilungsverhältnis (V) gewählt werden.

8. Verfahren nach Anspruch 7, bei dem Verkehrsteilnehmer, die sich nicht an die Routenempfehlung halten, erfasst und an den Verkehrsleitrechner gemeldet werden, wo sie bei der Bestimmung der Verteilungsverhältnisse an den Routenverzweigungspunkten entlang der betroffenen Routen berücksichtigt werden.

**Claims**

1. Method for equalizing traffic flows and for avoiding and resolving congestion, wherein, when a plurality of alternatively possible routes (R11, R12, R13, R21, R22) to a respective destination (B) are available, traffic participants (T, 1, .., 4) receive individual route recommendations (RE),

wherein at least one traffic control computer uses both reports (M) from traffic participants and route segment parameters to determine for each route branch point (REP1, REP2, REP3) at specific time intervals a new respective distribution ratio (V) for the statistical frequency of the respective route recommendations at a respective route branch point (REP1), with a route being assigned a higher frequency in the case of more favourable traffic conditions, wherein, ahead of a respective route branch point, a respective traffic participant (T) receives a random route recommendation (RE) from the set of alternatively possible routes in accordance with the statistical frequency of the respective route recommendations.

**2.** Method according to claim 1,
wherein the traffic participants additionally convey their travel destination to the traffic control computer in the reports and wherein the traffic control computer will take account of the respective traffic participant while an individual route recommendation is being allocated only if the respective travel destination of the route recommendation matches the traffic participant's respective travel destination.

**3.** Method according to claim 1 or 2,
wherein the respective distribution ratio (V) is conveyed to the traffic participants via radio-based traffic message channels, and
wherein the individual route recommendations are formed with the aid of a vehicle navigation system from the received respective distribution ratio (V) of the routes.

**4.** Method according to claim 3,
wherein, ahead of a respective route branch point, a respective route $r_i$ is selected for a respective participant in accordance with the respective distribution ratio $k_1:k_2: ... :k_n$ randomly from n alternatively possible routes in such a way that the route $r_i$ will be selected if a respectively generated random number z between 0 and less than 1 lies within the interval $S_{i-1} <= z < S_i$ belonging to the respective route, with the respective interval limits being determined by the relationships $S_0 = 0$ and $S_i = (k_1 + k_2 + ... + k_i) / (k_1 + k_2 + ... + kn)$.

**5.** Method according to claim 1 or 2,
wherein the respective route recommendation (RE) is transmitted by briefly setting up a connection between a system mounted by the road and the respective participant's vehicle via a wireless communication link ahead of a respective route branch point (REP1, REP2, REP3).

**6.** Method according to claim 1 or 2,
wherein the respective route recommendation (RE) is transmitted by setting up an individual wireless communication link between the traffic control computer and the individual traffic participant.

**7.** Method according to one of claims 1 or 2,
wherein the individual route recommendations are effected with the aid of change signs, with the display times of the individual alternative signs being selected in accordance with the distribution ratio (V).

**8.** Method according to claim 7,
wherein traffic participants not adhering to the route recommendation will be registered and reported to the traffic control computer, where they will be taken into account when the distribution ratios at the route branch points along the affected routes are determined.

**Revendications**

**1.** Procédé destiné corriger des flux de trafic ainsi qu'à éviter et résoudre des bouchons,
dans lequel, lorsque plusieurs routes possibles alternatives (R11, R12, R13, R21, R22) vers une destination respective (B) sont disponibles, les usagers de la route (T, 1, ..., 4) reçoivent des recommandations de route individuelles (RF),
dans lequel au moins un ordinateur pilote de trafic détermine pour chaque point d'embranchement de routes, dans des intervalles de temps déterminés, un nouveau rapport de répartition respectif (V) pour la fréquence statistique des recommandations de routes respectives au niveau d'un point d'embranchement de routes respectif (REP1) à partir de messages (M) d'usagers de la route et de paramètres de segments de route, une fréquence plus grande étant attribuée en cas de conditions de trafic d'une route plus avantageuses,
dans lequel un usager respectif (T) de la route, avant un point respectif d'embranchement de routes, reçoit une recommandation de route aléatoire (RE) à partir de la quantité de routes possibles alternatives selon la fréquence statistique des recommandations de route respectives.

2. Procédé selon la revendication 1,
dans lequel les usagers de la route transmettent en plus dans les messages leur lieu de destination à l'ordinateur pilote de trafic et dans lequel l'ordinateur pilote de trafic ne prend en considération l'usager de la route respectif lors de l'attribution d'une recommandation de route individuelle que lorsque le lieu de destination respectif de la recommandation de route correspond au lieu de destination respectif de l'usager de la route.

3. Procédé selon la revendication 1 ou 2,
dans lequel le rapport de répartition respectif (V) est transmis aux usagers de la route par l'intermédiaire de canaux de messages de trafic basés radio et dans lequel les recommandations de routes individuelles sont formées à l'aide d'un système de navigation de véhicules à partir du rapport de répartition respectif (V) des routes.

4. Procédé selon la revendication 3,
dans lequel, avant un point respectif d'embranchement de routes, une route respective $r_i$ est sélectionnée pour un usager respectif de manière correspondant au rapport de répartition respectif $k_1 : k_2 : ... : k_n$ de manière aléatoire à partir de n routes possibles alternatives, de sorte que la route $r_i$ est sélectionnée dans la mesure où un nombre aléatoire z respectivement généré entre 0 et inférieur à 1 se situe dans l'intervalle $S_{i-1} <= z < S_i$ appartenant à la route respective, les limites d'intervalles respectives étant fixées par les relations $S_0=0$ et $S_i = (k_1 + k_2 + ... k_i) / (k_1 + k_2 + ... k_n)$.

5. Procédé selon la revendication 1 ou 2,
dans lequel la recommandation de route respective (RE) est transmise du fait qu'avant un point d'embranchement de routes (REP1, REP2, REP3), une liaison entre une installation montée sur la route et le véhicule de l'usager respectif est établie momentanément par l'intermédiaire d'une liaison de communication sans fil.

6. Procédé selon la revendication 1 ou 2,
dans lequel la recommandation de route respective (RE) est transmise du fait qu'une liaison de communication sans fil individuelle est établie entre l'ordinateur pilote de trafic et l'usager de la route individuel.

7. Procédé selon la revendication 1 ou 2,
dans lequel les recommandations de route individuelles sont causées à l'aide de panneaux indicateurs changeants, les temps d'affichage de chacun des panneaux indicateurs alternatifs étant sélectionnés conformément au rapport de répartition (V).

8. Procédé selon la revendication 7,
dans lequel les usagers de la route qui ne suivent pas la recommandation de route, sont enregistrés et signalés à l'ordinateur pilote de trafic, où, lors de la détermination des rapports de répartition, ils sont pris en considération aux points d'embranchement de routes le long des routes concernées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10203242 A1